# EUROPÄISCHE PATENTSCHRIFT

(11) **EP 1 135 235 B1**
(45) Veröffentlichungstag und Bekanntmachung des Hinweises auf die Patenterteilung: **02.10.2002**
(21) Anmeldenummer: 99965386.8
(22) Anmeldetag: 01.12.1999
(51) Int. Cl.: B23Q 7/00, B23Q 7/14, B23Q 7/03, B23Q 7/10, B23Q 1/66, H05K 13/00

(54) **FERTIGUNGSANLAGE ZUR BEARBEITUNG VON KLEINBAUTEILEN SOWIE VERFAHREN ZUR ERHÖHUNG DER AUSBRINGUNG BEI EINER DERARTIGEN ANLAGE**
MANUFACTURING PLANT FOR PROCESSING SMALL COMPONENTS AND METHOD FOR INCREASING THE OUTPUT OF A MANUFACTURING PLANT OF THIS TYPE
INSTALLATION DE PRODUCTION DESTINEE AU TRAITEMENT DE COMPOSANTS COMPACTS ET PROCEDE D'AUGMENTATION DU RENDEMENT D'UNE TELLE INSTALLATION

(30) Priorität: 04.12.1998 DE 19856103
(43) Veröffentlichungstag der Anmeldung: 26.09.2001
(73) Patentinhaber: TYCO Electronics Logistics AG, 9323 Steinach (CH)
(72) Erfinder: STADLER, Heinz, D-81249 München (DE); HEINZL, Alfred, D-81477 München (DE)
(74) Vertreter: Hirsch, Peter, Dipl.-Ing.
(86) Internationale Anmeldenummer: DE9903813
(87) Internationale Veröffentlichungsnummer: WO00034005

(56) Entgegenhaltungen:
- EP-A- 0 615 405
- EP-A- 0 747 165
- EP-A- 0 873 817
- WO-A-96/11769
- DE-C- 4 116 875
- FR-A- 2 602 166
- PATENT ABSTRACTS OF JAPAN vol. 010, no. 372 (M-544), 11. Dezember 1986 (1986-12-11) & JP 61 164769 A (MATSUSHITA ELECTRIC IND CO LTD), 25. Juli 1986 (1986-07-25)

## Beschreibung

Die Erfindung betrifft eine Fertigungsanlage zur Bearbeitung von Kleinbauteilen, insbesondere elektrischen Bauteilen, gemäß dem Oberbegriff des Anspruchs 1 (EP-A-0 873 817).

Eine Fertigungsanlage ist zum Beispiel aus der EP 0 615 405 B1 bekannt. Als Transportsystem wird ein stabförmiges Magazin verwendet, in welchem die Kleinbauteile in Reihe angeordnet sind. Jeweils ein Bauteil befindet sich in der Bearbeitungsposition. Nach Beendigung der Bearbeitung wird das stabförmige Magazin über eine an der Unterseite des Magazins angreifende Vorschubeinrichtung um ein Bauteil verfahren, so daß die Bearbeitung am nächsten Bauteil erfolgen kann.

Derarte Fertigungsanlagen haben den Nachteil, daß die Bearbeitungsstation während dem Vorschub des Transportsystems stillsteht und sich somit eine relativ geringe Taktzeit der gesamten Fertigungsanlage ergibt.

Zur Verringerung der Taktzeit von derarten Anlagen sind bisher folgende Maßnahmen bekannt:

Die Bewegungsabläufe wurden auf höhere Geschwindigkeiten getrimmt, was jedoch zu immer aufwendigeren Endladedämpfungen und erhöhtem Verschleiß führte.

Desweiteren wurden die Einrichtungen so aufgebaut, daß durch möglichst kurze Wege Zeitverkürzungen erreicht wurden. Dies führte jedoch zu einer sehr dichten und somit schwer zugänglichen und wartbaren Bauweise.

Eine weitere Maßnahme ist, an jedem Transportsystem zwei Bearbeitungsstationen anzuordnen. Dies hat jedoch den Nachteil, daß bei Bearbeitungsstation mit von Bauteil zu Bauteil unterschiedlichen Bearbeitungszeiten stets diejenige Bearbeitungsstation die Taktzeit bestimmt, welche für das zu bearbeitende Bauteil die größere Bearbeitungszeit benötigt. Außerdem verdoppeln sich nahezu die Anlagekosten, da zwei Bearbeitungsstationen benötigt werden.

Der Erfindung liegt daher die Aufgabe zugrunde, bei einer gattungsgemäßen Fertigungsanlage die Ausbringung zu erhöhen, ohne daß die Anlagenkosten wesentlich steigen.

Diese Aufgabe wird erfindungsgemäß durch die Merkmale des Anspruchs 1 gelöst.

Bezüglich des Verfahrens wird die Aufgabe bei einer derarten Anlage dadurch gelöst, daß die Bearbeitung des einen Bauteils während der Bewegung des anderen Bauteils durch das Transportsystem erfolgt.

Der Grundgedanke der Erfindung ist es, sehr teure Bearbeitungsstationen, wie zum Beispiel Prüfgeräte oder Laser zu 100 % einzusetzen und diese nicht während der Nebenzeiten ungenutzt zu lassen.

Gemäß einer Ausführungsform der Erfindung erstreckt sich ein einziger Bearbeitungsbereich über zumindest zwei Bauteile. Diese zwei Bauteile können über das Transportsystem unabhängig voneinander verfahren werden, so daß die Bearbeitung jeweils im Bereich des gerade ruhenden Bauteils erfolgen kann.

Das Transportsystem besteht gemäß einer Ausführungsvariante aus zwei parallelen stabförmigen Magazinen, welche über zwei getrennte Antriebsrollen bewegbar sind.

In einer anderen Ausführungsvariante besteht das Transportsystem aus einer Formkette, welche die einzelnen Bauteile in ihren Kettengliedern aufnimmt, wobei die Formkette über zwei getrennt ansteuerbare Antriebsrollen in Form einer Schlaufe geführt ist und nur im oberen Bereich auf den Antriebsrollen aufliegt. Der untere Teil der Schlaufe hängt frei durch und verlängert sich bei Vorschub durch die erste Rolle und verkürzt sich bei Vorschub durch die zweite Rolle.

Eine alternative Ausführungsform der Erfindung sieht vor, an der Bearbeitungsstation zwei getrennte Bearbeitungsbereiche auszubilden, welche abwechselnd zur Bearbeitung ansteuerbar sind. Das Transportsystem besteht in diesem Fall vorzugsweise aus einer Formkette, welche über getrennt ansteuerbare Antriebsrollen durch die Bearbeitungsbereiche führt, wobei ein Teil der Länge der Formkette zwischen den Antriebsrollen, zum Beispiel in Form einer durchhängenden Schlaufe, gespeichert ist.

Ebenso kann das Transportsystem auch aus zwei stabförmigen Magazinen bestehen, welche durch die jeweiligen Bearbeitungsbereiche geführt sind.

Besonders vorteilhaft ist es die Bewegung des Transportsystems durch das Ende der Bearbeitung zu steuern. Hierdurch wird eine Auslastung der Bearbeitungsstationen von nahezu 100 % erzielt.

Bei Bearbeitungsvorgängen mit immer gleichbleibenden Bearbeitungszeiten kann der Vorschubtakt auf den Bearbeitungstakt der Bearbeitungsstation abgestimmt werden und somit eine Steuerung entfallen.

Weitere vorteilhafte Ausgestaltungen ergeben sich aus den Unteransprüchen.

Nachfolgend wird die Erfindung anhand dreier in den Figuren dargestellter Ausführungsbeispiele näher erläutert. In den Zeichnungen zeigen:
- Figur: 1 eine Schrägansicht einer schematisierten Fertigungsanlage mit stabförmigen Magazinen als Transportsystem, die jedoch nicht in den Schutzbereich gemäß der Ansprüche fällt.
- Figur 2: die Ansicht aus Figur 1 mit einer Formkette als Transportsystem; und
- Figur 3: eine Seitenansicht einer schematisierten Fertigungsanlage mit zwei Bearbeitungsbereichen.

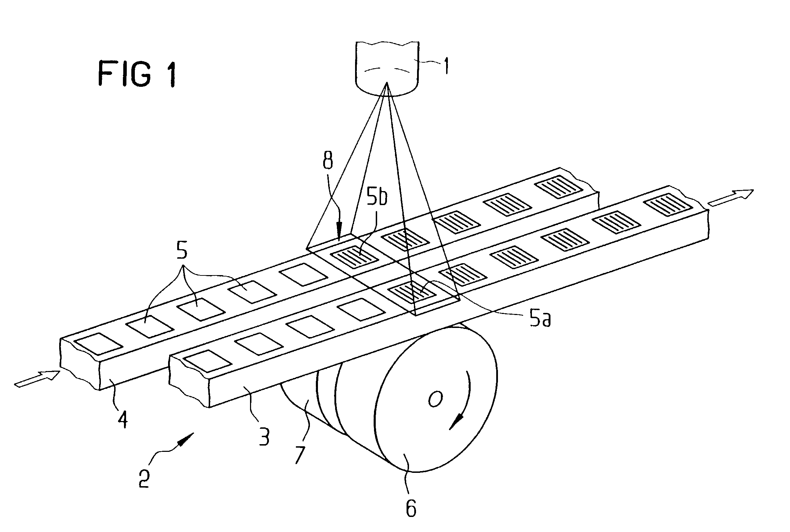

Figur 1 zeigt in Schrägansicht die schematisierte Darstellung einer Fertigungsanlage. Diese Anlage besteht aus einer Bearbeitungsstation 1 sowie einem Transportsystem 2. Das Transportsystem 2 weist zwei stabförmige Magazine 3 und 4 auf, in welchen jeweils in Reihe angeordnete Kleinbauteile 5 angeordnet sind. Das Transportsystem 2 umfaßt desweiteren zwei Antriebsrollen 6 und 7, welche die Vorschubeinrichtung für die Magazine 3 und 4 bilden und jeweils an der Unterseite dieser Magazine angreifen. Die beiden Magazine 3 und 4 sind parallel zueinander angeordnet und zur Bearbeitung der Bauteile 5 in Längsrichtung durch einen Bearbeitungsbereich 8 bewegt, welcher sich so über die beiden Magazine 3 und 4 erstreckt, daß sich jeweils ein Bauteil 5 im Bearbeitungsbereich 8 befindet.

Das dargestellte Ausführungsbeispiel betrifft eine Laserbeschriftungsanlage von elektrischen Bauteilen, wie zum Beispiel Relais. Ist der Laser mit dem Beschriften des Bauteils 5a im Magazin 3 fertig, fährt er automatisch am Bauteil 5b im Magazin 4 fort. Während der Beschriftung des Bauteils 5b im Magazin 4 wird das Magazin 3 über die Antriebsrolle 6 in eingezeichneter Pfeilrichtung um ein Bauteil 5 verschoben, so daß im Bearbeitungsbereich 8 nach vollendetem Vorschub auf der Seite des Magazins 3 wieder ein unbeschriftetes Bauteil positioniert ist. Nach dem Ende der Beschriftung des Bauteils 5b fährt der Laser wieder auf der Seite des Magazins 3 mit der Beschriftung des neu eingeführten unbeschrifteten Bauteils 5a fort.

Dadurch, daß über das Transportsystem 2 voneinander unabhängig zwei Bauteile in den Bearbeitungsbereich 8 hinein bzw. nach vollendeter Bearbeitung heraus bewegt werden können, ist die Bearbeitungsstation 1 auch während der Vorschubbewegung der einzelnen stabförmigen Magazine 3 und 4 ausgelastet.

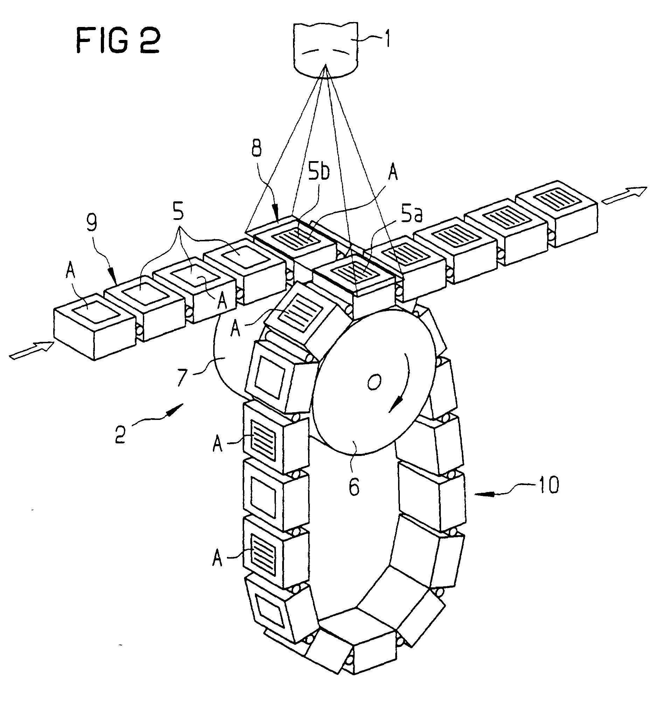

In Figur 2 ist die Fertigungsanlage gemäß Figur 1 dargestellt, wobei das Transportsystem 2 anstatt der stabförmigen Magazine 3 und 4 eine Formkette 9 aufweist, in deren Kettengliedern jeweils die zu bearbeitenden Bauteile 5 aufgenommen sind. Die Formkette 9 ist in Form einer Schlaufe 10 über die beiden Antriebsrollen 7 und 6 geführt, wobei die Formkette im oberen Teil der Schlaufe 10 auf den Antriebsrollen 7 und 6 aufliegt und im unteren Teil der Schlaufe von diesen über eine Länge von mehreren Kettengliedern beabstandet ist. Die Antriebsrollen 6 und 7 greifen an der Unterseite der Formkette 9 an und bilden die Vorschubeinrichtung für den jeweiligen Teil der Formkette 9. Auf der Oberseite der Antriebsrollen 6 und 7 verlaufen die Abschnitte der Formkette 9 parallel und sind so positioniert, daß im Bearbeitungsbereich 8 jeweils ein Bauelement 5a bzw. 5b liegt.

Auf der Seite der Antriebsrolle 7 erfolgt die Bearbeitung nur an jedem zweiten Bauteil. Diese Bauteile sind mit einem A gekennzeichnet. Ist die Bearbeitung an dem Bauteil 5b im Bearbeitungsbereich 8 beendet, fährt der Laser mit der Bearbeitung des Bauteils 5a oberhalb der Antriebsrolle 6 fort. Die Antriebsrolle 7 verfährt während der Beschriftung des Bauteils 5a die Formkette 9 um zwei Bauteile, so daß wieder ein Bauteil mit der Kennzeichnung A in den Bearbeitungsbereich 8 gelangt.

Ist der Laser mit der Beschriftung des Bauteils 5a oberhalb der Antriebsrolle 6 fertig, fährt er zum neuen Bauteil 5b oberhalb der Antriebsrolle 7. Währenddessen wird der zweite Teil der Formkette 9 durch die Antriebsrolle 6 ebenfalls um zwei Bauteile verfahren, so daß ein noch nicht beschriftetes Bauteil in den Bearbeitungsbereich 8 gelangt.

Dadurch, daß die Schlaufe 10 an der Unterseite über eine Länge von mehreren Kettengliedern von den Antriebsrollen 6 und 7 beabstandet ist, wird die Längenänderung der Schlaufe 10 lediglich durch ein Heben und Senken des unteren Teiles der Schlaufe 10 abgepuffert.

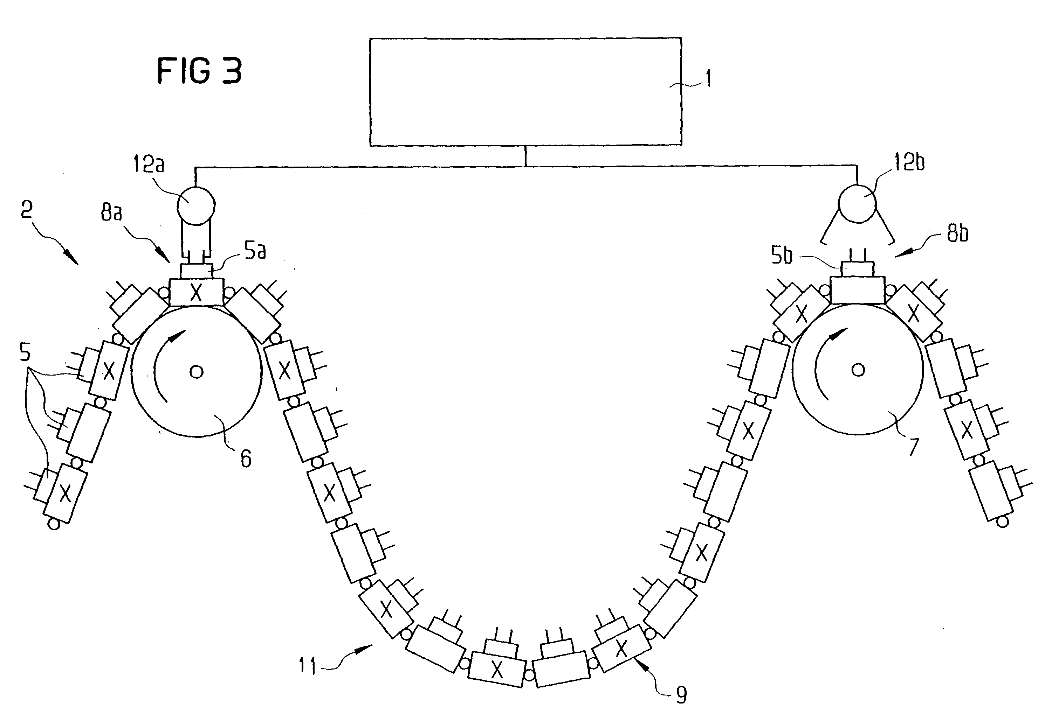

Figur 3 zeigt in schematischer Darstellung eine dritte Ausführungsform der Erfindung.

In dieser Ausführungsform weist die Bearbeitungsstation 1 zwei getrennte Bearbeitungsbereiche 8a und 8b auf, welche abwechselnd zur Bearbeitung der Bauteile 5 angesteuert werden können. Das Transportsystem 2 besteht bei dieser Variante aus einer Formkette 9, welche über zwei in Reihe angeordnete Antriebsrollen 6 und 7 geführt ist. Zwischen den Antriebsrollen 6 und 7 hängt die Formkette 9 in Form einer U-förmigen Schlaufe 11 durch.

Die Bearbeitungsstation 1 weist pro Bearbeitungsbereich 8a bzw. 8b ein Werkzeug 12a bzw. 12b auf. Erfolgt die Bearbeitung des Bauteils 5a im Bearbeitungsbereich 8a durch das Werkzeug 12a, so wird in dieser Zeit über die Antriebsrolle 7 das bereits bearbeitete Bauteil 5b aus dem Bearbeitungsbereich 8b verfahren. Der Vorschub beträgt jeweils zwei Bauteile, da die dazwischenliegenden Bauteile (mit x an der Formkette gekennzeichnet) bereits in der vorhergehenden Bearbeitungsstation behandelt wurden. Bei diesem Vorschub durch die Antriebsrolle 7 hebt sich die U-förmige Schlaufe 11 der Formkette 9, wodurch die unterschiedliche Anzahl der Kettenglieder zwischen den Bearbeitungsbereichen 8a und 8b ausgeglichen wird.

Ist die Bearbeitung im Bearbeitungsbereich 8a beendet, ist das Werkzeug 12a im geöffneten Zustand, woraufhin die Bearbeitungsstation 1 den Bearbeitungsbereich 8b und somit das Werkzeug 12b ansteuert. Das Werkzeug 12b schließt sich und beginnt mit der Bearbeitung des neu eingeführten Bauteiles 5b. In dieser Zeit wir über die Antriebsrolle 6 die Formkette 9 wieder um zwei Bauteile 5 verfahren, woraufhin sich die U-förmige Schlaufe 11 der Formkette 9 wieder senkt.

Das dargestellte Beispiel betrifft das Überprüfen von Relais, wobei die Bearbeitungsstation 1 das Prüfgerät und die Werkzeuge 12a und 12b die Adapter zur Überprüfung der Relais 5 darstellen.

Die Erfindung ist nicht auf die dargestellten Ausführungsformen beschränkt, so ist es auch möglich, für zwei getrennte Bearbeitungsbereiche 8a und 8b als Transportsystem parallel geführte stabförmige Magazine, wie in Figur 1 dargestellt, einzusetzen.

## Patentansprüche

1. Fertigungsanlage zur Bearbeitung von Kleinbauteilen (5), insbesondere elektrischen Bauteilen, mit einer Bearbeitungsstation (1) und einem Transportsystem (2), welches die zu bearbeitenden Bauteile (5) in einen Bearbeitungsbereich (8, 8a, 8b) hineinbewegt und nach erfolgter Bearbeitung wieder aus diesem herausbewegt, wobei
in der Bearbeitungsstation (1) zumindest zwei Bauteile (5a, 5b) in ihrem Bearbeitungsbereich (8, 8a, 8b) angeordnet sind, die über das Transportsystem (2) voneinander unabhängig in diesen hinein bzw. heraus bewegbar und von der Bearbeitungsstation (1) abwechselnd bearbeitbar sind,
**dadurch gekennzeichnet, daß**
das Transportsystem (2) eine Formkette (9) aufweist, in deren Kettenglieder die einzelnen Bauteile (5) aufgenommen sind.

2. Fertigungsanlage nach Anspruch 1,
**dadurch gekennzeichnet, daß**
sich ein einziger Bearbeitungsbereich (8) über zumindest zwei Bauteile (5a, 5b) erstreckt.

3. Fertigungsanlage nach Anspruch 1,
**dadurch gekennzeichnet, daß**
zumindest zwei Bearbeitungsbereiche (8a, 8b) vorgesehen sind, welche abwechselnd zur Bearbeitung ansteuerbar sind.

4. Fertigungsanlage nach einem der Ansprüche 1 bis 3,
**dadurch gekennzeichnet, daß**
die Bauteile in dem Transportsystem (2) in Reihe aufgenommen sind.

5. Fertigungsanlage nach einem der Ansprüche 1 bis 4,
**dadurch gekennzeichnet, daß**
das Transportsystem (2) mindestens zwei unabhängig voneinander angetriebene Vorschubeinrichtungen (6, 7) aufweist.

6. Fertigungsanlage nach einem der Ansprüche 1 bis 5,
**dadurch gekennzeichnet, daß**
die Formkette (9) über zumindest zwei parallele und getrennt angetriebene Antriebsrollen (6, 7) in Form zumindest einer Schlaufe (10) geführt ist und nur im oberen Bereich auf den Antriebsrollen (6, 7) aufliegt, so daß mindestens zwei Bauteile (5a, 5b) im wesentlichen parallel nebeneinander angeordnet sind.

7. Fertigungsanlage nach einem der Ansprüche 1 bis 5,
**dadurch gekennzeichnet, daß**
die Formkette (9) über zumindest zwei hintereinander angeordnete und getrennt angetriebene Antriebsrollen (6, 7) geführt ist und dazwischen ein Teil der Formkette (9) z. B. über eine durchhängende U-förmige Schlaufe (11) gespeichert ist.

8. Fertigungsanlage nach einem der Ansprüche 1 bis 7,
**dadurch gekennzeichnet, daß**
die Bewegung des Transportsystems (2) durch das Ende der Bearbeitung gesteuert ist.

9. Verfahren zur Erhöhung der Ausbringung bei einer Fertigungsanlage nach einem der Ansprüche 1 bis 8,
**dadurch gekennzeichnet, daß**
die Bearbeitung des einen Bauteils während der Bewegung des anderen Bauteils durch das Transportsystem (2) erfolgt.

## Claims

1. A manufacturing plant for processing small components (5), in particular electrical components, having a processing station (1) and a transport system (2) which moves the components (5) to be processed into a processing region (8, 8a, 8b) and moves them out of it again once processing is complete,
in which, in the processing station (1), at least two components (5a, 5b) are arranged in their processing region (8, 8a, 8b) and are movable into the processing region and out of it independently of one another by way of the transport system (2) and are processable alternately by the processing station (1),
**characterised in that** the transport system (2) has a shaped chain (9) in the chain links whereof the individual components (5) are received.

2. A manufacturing plant according to Claim I,
**characterised in that** a single processing region (8) extends over at least two components (5a, 5b).

3. A manufacturing plant according to Claim 1,
**characterised in that** at least two processing regions (8a, 8b) which arc controllable alternately for the purpose of processing are provided.

4. A manufacturing plant according to one of Claims 1 to 3,
**characterised in that** the components are received in the transport system (2) in sequence.

5. A manufacturing plant according to one of Claims 1 to 4,
**characterised in that** the transport system (2) has at least two feed devices (6, 7) driven independently of one another.

6. A manufacturing plant according to one of Claims 1 to 5,
**characterised in that** the shaped chain (9) is guided over at least two parallel, separately driven drive rollers (6, 7) in the form of at least one loop (10) and lies on the drive rollers (6, 7) only in the upper region, so that at least two components (5a, 5b) are arranged substantially parallel next to one another.

7. A manufacturing plant according to one of Claims 1 to 5,
**characterised in that** the shaped chain (9) is guided over at least two separately driven drive rollers (6, 7) arranged one behind the other, and in between a part of the shaped chain (9) is stored for example by way of a sagging U-shaped loop (11).

8. A manufacturing plant according to one of Claims 1 to 7,
**characterised in that** movement of the transport system (2) is controlled by the end of processing.

9. A process for increasing the output of a manufacturing plant according to one of Claims 1 to 8,
**characterised in that** processing of the one component is performed while the other component is moved by the transport system (2).

## Revendications

1. Installation de production pour le traitement de petits composants (5), en particulier de composants électriques, comportant une station de traitement (1) et un système de transport (2), insérant les composants à traiter (5) dans une section de traitement (8, 8a, 8b) et les en sortant après l'achèvement du traitement,
au moins deux composants (5a, 5b) étant agencés dans la section de traitement (8, 8a, 8b) de la station de traitement (1), pouvant être déplacés indépendamment par le système de transport (2) en vue de leur insertion et de leur sortie correspondante et pouvant être traités en alternance par la station de traitement (1),
**caractérisée en ce que** le système de transport (2) comporte une chaîne profilée (9), dont les maillons reçoivent les différents composants (5).

2. Installation de production selon la revendication 1,
**caractérisée en ce qu'**une seule section de traitement (8) s'étend sur au moins deux composants (5a, 5b).

3. Installation de production selon la revendication 1,
**caractérisée en ce qu'**elle comporte au moins deux sections de traitement (8a, 8b), pouvant servir en alternance au traitement.

4. Installation de production selon l'une des revendications 1 à 3,
**caractérisée en ce que** les composants sont reçus en série dans le système de transport (2).

5. Installation de production selon l'une des revendications 1 à 4,
**caractérisée en ce que** le système de transport (2) comporte au moins deux dispositifs d'avance à entraînement individuel (6, 7).

6. Installation de production selon l'une des revendications 1 à 5,
**caractérisée en ce que** la chaîne profilée (9) est guidée par au moins deux rouleaux d'entraînement parallèles à entraînement séparé (6, 7), sous forme d'au moins une boucle (10) et ne repose sur les rouleaux d'entraînement (6, 7) que dans la section supérieure, de sorte qu'au moins deux composants (5a, 5b) sont pour l'essentiel juxtaposés de manièrc parallèle.

7. Installation de production selon l'une des revendications 1 à 5,
**caractérisée en ce que** la chaîne profilée (9) est guidée par au moins deux rouleaux d'entraînement agencés l'un derrière l'autre et à entraînement séparé (6, 7), une partie de la chaîne profilée (9) étant stockée entre eux, par exemple par une boucle en U fléchie (11).

8. Installation de production selon l'une des revendications 1 à 7,
**caractérisée en ce que** le déplacement du système de transport (2) est commandé en fonction de la fin du traitement.

9. Procédé d'accroissement du rendement d'une installation de production selon l'une des revendications 1 à 8,
**caractérisé en ce que** le traitement d'un composant est exécuté au cours du déplacement de l'autre composant par le système de transport (2).
